# EUROPÄISCHE PATENTANMELDUNG

(11) **EP 4 298 905 A1**
(43) Veröffentlichungstag der Anmeldung: **03.01.2024**
(21) Anmeldenummer: 23401018.9
(22) Anmeldetag: 30.05.2023
(51) Int. Cl.: A01M 7/00

(54) **LANDWIRTSCHAFTLICHE FELDSPRITZE**

(30) Priorität: 01.07.2022 DE 102022116450
(71) Anmelder: Amazonen-Werke H. Dreyer SE & Co. KG, 49205 Hasbergen (DE)
(72) Erfinder: Austermann, Stefan, 48291 Telgte (DE); Dreyer, Justus, 49078 Osnabrück (DE); Wessels, Thomas, 49080 Osnabrück (DE); Dembeck, Achim, 49134 Wallenhorst (DE); Klemann, Timo, 49191 Belm (DE); Stein, Florian, 49078 Osnabrück (DE); Trentmann, Markus, 49134 Wallenhorst (DE)

(57) **Zusammenfassung**

Landwirtschaftliche Feldspritze (10) mit wenigstens einer Einspülvorrichtung (20) zum Zuführen von Frischwasser (W) aus einer externen Quelle (G), umfassend wenigstens einen der Feldspritze (10) zugeordneten Behälter (11), welchem das Frischwasser (W) über die Einspülvorrichtung (20) zuführbar ist; und wenigstens eine zum Reinigen des zugeführten Frischwassers (W) vorgesehene Filter- und/oder Abscheideeinrichtung (30), welche vorzugsweise im Bereich der Einspülvorrichtung (20) angeordnet ist. Um eine landwirtschaftliche Feldspritze (10) anzugeben, bei der die Filterung und/oder Reinigung von aus externen Quellen (G) zugeführtem und/oder zuführbaren Frischwasser (W) in einfacher Weise verbessert ist, ist vorgesehen, dass die Filter- und/oder Abscheideeinrichtung (30) dazu eingerichtet ist, dass Frischwasser (W) zumindest abschnittsweise in Drehung zu versetzen.

## Beschreibung

Die Erfindung betrifft eine landwirtschaftliche Feldspritze gemäß dem Oberbegriff des Patentanspruches 1.

Auf dem Gebiet der Landwirtschaft sind eine Vielzahl von Varianten gezogener, angebauter und/oder selbstfahrender Feldspritzen bekannt. Solche Feldspritzen werden zum Ausbringen von Spritzflüssigkeiten, wie beispielsweise Pflanzenschutzmittel, Düngemittel, Schädlings- bzw. Unkrautbekämpfungsmittel oder drgl., eingesetzt. In der Regel weisen derartige Feldspritzen ein quer zur Fahrtrichtung klappbares Spritzgestänge mit mehreren daran angeordneten Spritzdüsen auf, über welche die aus wenigstens einem Behälter der Feldspritze vorgehaltene Spritzflüssigkeit auf einer landwirtschaftlichen Nutzfläche ausbringbar ist.

Gattungsgemäße Spritzflüssigkeiten werden oftmals erst innerhalb der Feldspritze aus Frischwasser und wenigstens einer zugesetzten Substanz bzw. Wirkstoff generiert. Das Frischwasser ist dabei häufig über eine der Feldspritze zugeordnete Einspülvorrichtung aus wenigstens einer externen Quelle in zumindest einen an der Feldspritze angeordneten Behälter zuführbar. Je nach Ausführungsvariante und/oder Bedarf kommen hierbei externe Wasserversorgungsanlagen, Frischwassertanks und/oder Gewässer, wie beispielsweise Seen, Teiche, Brunnen und/oder Flüsse, als Quellen für Frischwasser in Frage. Je nach verwendeter Quelle, kann die Qualität des Frischwassers, insbesondere hinsichtlich von Verunreinigungen nach Art von Feststoffpartikeln, wie beispielsweise Sand, Schlamm oder dergl., erheblich schwanken. Aus diesem Grund hat sich in der landwirtschaftlichen Praxis der Einsatz von Filter- und/oder Abscheideeinrichtungen durchgesetzt, welche zum Reinigen des zugeführten bzw. zuführbaren Frischwassers vorgesehen sind.

Aus der DE 10 2018 114 908 A1 ist beispielsweise eine Feldspritze bekannt, bei welcher die wenigstens eine Filter- und/oder Abscheideeinrichtung dazu eingerichtet ist, dass zugeführte bzw. zuführbare Frischwasser unter Ausnutzung des Siebeffektes zu reinigen bzw. zu filtern. Hierfür umfasst die Filter- und/oder Abscheideeinrichtung einen oder mehrere mit Poren versehene Filtereinsätze, mittels welcher die Filter- und/oder Abscheideeinrichtung dazu eingerichtet ist, im Frischwasser enthaltene Verunreinigungen, insbesondere grobe und/oder verhältnismäßig große Feststoffpartikel, zumindest im Wesentlichen zurückzuhalten.

Für den Einsatz an modernen landwirtschaftliche Feldspritzen, welche Fluidbauteile, wie z.B. Förderleitungen, Ventile und/oder Spritzdüsen oder dergl., mit verhältnismäßig besonders kleinen Querschnitten (z.B. DG01) aufweisen, haben sich die bisherige Filter- und/oder Abscheideeinrichtungen als nachteilig und/oder unzureichend erwiesen.

Vor diesem Hintergrund stellt sich die Erfindung die Aufgabe, eine landwirtschaftliche Feldspritze anzugeben, bei der die Filterung und/oder Reinigung von aus externen Quellen zugeführtem und/oder zuführbaren Frischwasser in einfacher Weise verbessert ist.

Diese Aufgabe wird erfindungsgemäß dadurch gelöst, dass die Filter- und/oder Abscheideeinrichtung dazu eingerichtet ist, dass Frischwasser zumindest abschnittsweise in Drehung zu versetzen.

Infolge dieser Maßnahme können im Frischwasser enthaltene Verunreinigungen, insbesondere Feststoffpartikel, unter Ausnutzung von aus der Drehung resultierender Zentrifugal- und/oder Fliehkräfte vom Frischwasser getrennt und somit gefiltert und/oder abgeschieden werden. Die Filter- und/oder Abscheideeinrichtung ist dabei bevorzugt dazu eingerichtet, die Drehung während dem Durchströmen auf das Frischwasser zu übertragen und/oder zu initiieren. Eine derartige Ausführungsform hat den Vorteil, dass hierbei die Verunreinigungen in eine von der eigentlichen Strömungsrichtung des Frischwassers abweisenden Richtung transportiert und/oder abgetragen werden. Bevorzugt sind hierbei außerdem ein oder mehrere aktiv verstellbare und/oder antreibbare Filterelemente vorgesehen, welche zum Beeinflussen des beim Einspülen die Filter- und/oder Abscheideeinrichtung durchströmenden Frischwassers und damit zum Filtern der Verunreinigungen vorgesehen sind. Alternativ oder zusätzlich sind ein oder mehrere innerhalb der Filter- und/oder Abscheideeinrichtung angeordnete passive Filterelemente vorgesehen, welche zum Filtern und/oder Reinigen vom Frischwasser umströmt und/oder durchströmt werden.

Unter dem Begriff "Einspülen" ist erfindungsgemäß und im Folgenden das Zuführen des Frischwassers in die Feldspritze, insbesondere einen an der Feldspritze angeordneten Behälter, aus einer externen Quelle zu verstehen. Je nach Ausführungsvariante der Feldspritze kann das Frischwasser dabei druckbeaufschlagt von der externen Quelle bereitgestellt und/oder zugeführt oder mittels einer der Feldspritze zugeordneten Fördereinrichtung, insbesondere Pumpe, angesaugt werden.

Die wenigstens eine Filter- und/oder Abscheideeinrichtung ist je nach Ausführung und/oder Bedarf innerhalb der Feldspritze positioniert. Bevorzugt ist die Filter- und/oder Abscheideeinrichtung im Bereich der Einspülvorrichtung und damit insbesondere in Strömungsrichtung des Frischwassers gesehen vor dem Behälter der Feldspritze angeordnet. Darüber hinaus kann alternativ oder zusätzlich wenigstens eine weitere derartige Filter- und/oder Abscheideeinrichtung vorgesehen sein, welche in Strömungsrichtung hinter dem Behälter, vorzugsweise entlang eines für die Spritzflüssigkeit vorgesehenen Flüssigkeitskreislaufs, angeordnet ist.

Ferner wäre auch bevorzugt denkbar, dass die erfindungsgemäße Filter- und/oder Abscheideeinrichtung mit einer klassischen Filtereinrichtung kombinierbar ist. Beispielsweise kann in Strömungsrichtung des Frischwassers vor und/oder hinter der erfindungsgemäße Filter- und/oder Abscheideeinrichtung wenigstens eine klassische Filtereinrichtung angeordnet sein, wobei die klassische Filtereinrichtung vorzugsweise wenigstens einen, insbesondere siebartigen, Filtereinsatz aufweist.

Des Weiteren kann die Einspülvorrichtung ferner eine Einspülschleuse zum Einbringen des Frischwassers und/oder von Wirkstoffen umfassen. Die Filter- und/oder Abscheideeinrichtung ist hierbei bevorzugt zwischen der Einspülschleuse und dem zum Vorhalten des Frischwassers und/oder der Spritzflüssigkeit vorgesehenen Behälters der Feldspritze angeordnet.

In einer bevorzugten Ausführungsform der erfindungsgemäßen Feldspritze ist der Filter- und/oder Abscheideeinrichtung wenigstens ein, vorzugsweise nach Art eines Drehantriebs ausgebildeter, Aktor zugeordnet ist, mittels dem die Filter- und/oder Abscheideeinrichtung, vorzugsweise rotatorisch, antreibbar ist. Der wenigstens eine Aktor ist dabei vorzugsweise an der Filter- und/oder Abscheideeinrichtung angeordnet. Der Aktor ist besonders bevorzugt in bedarfsgerechter Weise während dem Einspülen des Frischwassers einschaltbar und/oder betreibbar. Eine derartige Ausführungsform ermöglicht eine besonders ausgeprägte Drehung des Frischwassers, aus der besonders hohe Zentrifugal- und/oder Fliehkräfte zum Trennen der Verunreinigungen vom Frischwasser resultieren.

Ferner bevorzugt ist eine Filter- und/oder Abscheideeinrichtung, welche mittels einer zum Fördern des Frischwassers und/oder der Spritzflüssigkeit vorgesehenen Fördereinrichtung, insbesondere Pumpe, antreibbar und/oder betreibbar ist. Besonders bevorzugt kann die Filter- und/oder Abscheideeinrichtung hierbei mit der Fördereinrichtung gekoppelt sein. Anhand eines derartigen Aufbaus kann eine besonders kompakt aufgebaute Filter- und/oder Abscheideeinrichtung und damit Feldspritze geschaffen werden.

In einer Weiterbildung der erfindungsgemäßen Feldspritze weist ist die Filter- und/oder Abscheideeinrichtung wenigstens ein zum Beschleunigen des Frischwassers vorgesehenes Element auf, welches durch den Aktor antreibbar ist. Ein derartiges Element weist vorzugsweise ein oder mehrere schaufel- und/oder paddelartige Vorsprünge auf, wobei das Element dabei besonders bevorzugt nach Art eines Pumpenlaufrads oder dergl. ausgebildet ist. Alternativ dazu kann ein derartiges Element auch selbst als Schaufel oder Paddel ausgebildet sein, welches beweglich innerhalb der Filter- und/oder Abscheideeinrichtung angeordnet ist. Mit einer derartigen Ausführungsform lassen sich besonders hohe Beschleunigungskräfte auf das Frischwassers und damit die Verunreinigungen übertragen, welche zumindest im Wesentlichen quer zur eigentlichen Strömungsrichtung des Frischwassers gerichtet sind.

In einer anderen bevorzugten Ausführungsform der erfindungsgemäßen Feldspritze ist die Filter- und/oder Abscheideeinrichtung nach Art eines Separators, insbesondere eines Tellerseparators, ausgebildet. Die Filter- und/oder Abscheideeinrichtung umfasst hierbei vorzugsweise passive Filterelemente, welche nach Art von Lamellen ausgebildet sind. Die lamellenartigen Filterelemente sind dabei besonders bevorzugt zumindest teilweise innerhalb einer rotatorisch antreibbaren Trommel angeordnet, welche dazu eingerichtet ist, das Frischwasser und/oder die Verunreinigungen in Drehung zu versetzen. Die aufgrund der Drehung in radialer Richtung transportierten und/oder angestauten Verunreinigungen sind hierbei besonders bevorzugt über ein oder mehrere am Umfang verteilte und periodisch verschließbare Öffnungen austragbar. Mit anderen Worten ist die Filter- und/oder Abscheideeinrichtung hierbei bevorzugt selbstreinigend ausgebildet. Durch eine derartige Ausführungsform ist eine Filter- und/oder Abscheideeinrichtung geschaffen, welche besonders wartungsarm ist und/oder welche einer besonders geringen Reinigung durch einen Bediener bedarf.

In einer anderen Weiterbildung der erfindungsgemäßen Feldspritze ist die Filter- und/oder Abscheideeinrichtung nach Art eines Zyklon- und/oder Fliehkraftabscheiders ausgebildet. Hierdurch ist eine besonders effektive und dabei robuste Filter- und/oder Abscheideeinrichtung geschaffen, durch welche die Betriebssicherheit der Feldspritze in besonders einfacher Weise gesteigert ist.

In einer weiteren bevorzugten Ausführungsform der erfindungsgemäßen Feldspritze ist der Filter- und/oder Abscheideeinrichtung wenigstens eine Stelleinrichtung zugeordnet, mittels der die Filter- und/oder Abscheideeinrichtung verstellbar ist. Die Stelleinrichtung ist vorzugsweise fernbetätigt ausgeführt. Ferner kann die Stelleinrichtung manuell von einem Bediener und/oder automatisiert von einer der Feldspritze zugeordneten Steuer- und/oder Regelungseinrichtung betätigbar sein. Besonders bevorzugt ist vorgesehen, dass die Stelleinrichtung dazu eingerichtet ist, das eine oder die mehreren aktiven Filterelemente zu verstellen.

In einer weiteren Weiterbildung der erfindungsgemäßen Feldspritze weist die Filter- und/oder Abscheideeinrichtung wenigstens eine zum Abführen von im Frischwasser enthaltenen Feststoffpartikeln, insbesondere Verunreinigungen, vorgesehene Öffnung auf, über welche die Feststoffpartikel, insbesondere Verunreinigungen, aus einem Flüssigkeitskreislauf der Feldspritze ausleitbar sind. Die Öffnung kann dabei je nach Ausführungsvariante verschließbar ausgeführt sein. Eine derartige Ausführungsform hat den Vorteil, dass die Filter- und/oder Abscheideeinrichtung zumindest weitestgehend selbstreinigend und damit besonders wartungsarm ausgeführt ist.

Darüber hinaus ist eine erfindungsgemäße Feldspritze bevorzugt, bei der die Öffnung mittels der Stelleinrichtung beeinflussbar, insbesondere verstellbar, ist. Insbesondere kann dabei vorgesehen sein, dass mittels der Stelleinrichtung der Querschnitt der Öffnung anpassbar ist. Ferner bevorzugt ist die Stelleinrichtung dazu eingerichtet, die Öffnung bedarfsgerecht zu öffnen und/oder zu verschließen. Alternativ oder zusätzlich kann die Stelleinrichtung dazu eingerichtet sein, die Öffnung erst nach Ansammlung einer bestimmten Menge von Feststoffpartikeln, insbesondere Verunreinigungen, und/oder nach definierten zeitlichen Abständen zu öffnen und/oder zu verschließen.

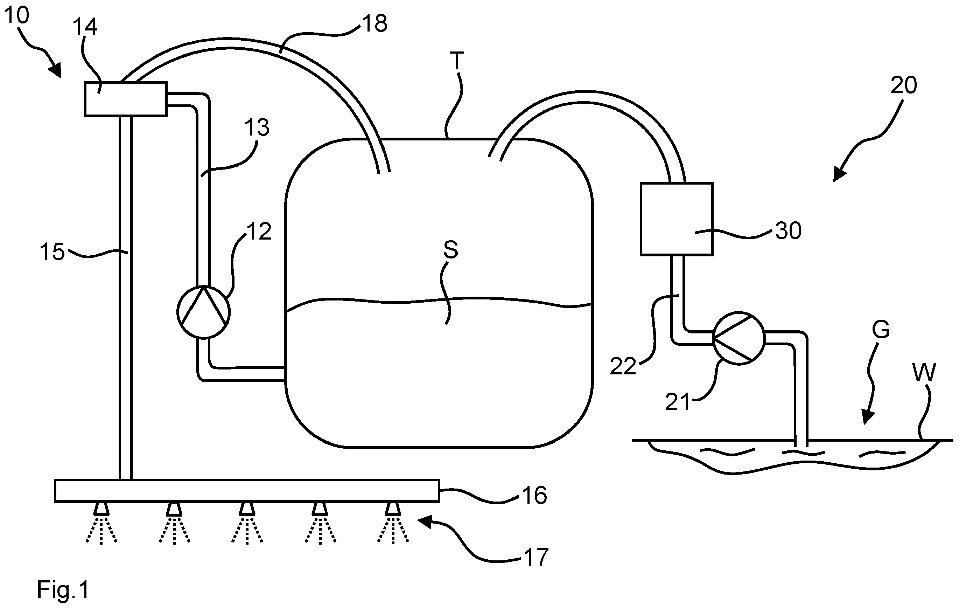

Weitere Einzelheiten der Erfindung sind der Beispielsbeschreibung und der nachfolgenden Zeichnung zu entnehmen. Die Zeichnung zeigt
- Fig.1: eine erfindungsgemäße landwirtschaftliche Feldspritze in schematischer Darstellung.

Eine landwirtschaftliche Feldspritze 10 zum Ausbringen einer Spritzflüssigkeit S, wie beispielsweise Pflanzenschutzmittel, auf einer landwirtschaftlichen Nutzfläche ist in der Fig.1 gezeigt.

Die Feldspritze 10 weist wenigstens einen Behälter 11 zum Vorhalten der auszubringenden Spritzflüssigkeit S auf. Die Spritzflüssigkeit S setzt sich dabei aus Wasser W bzw. Frischwasser/Klarwasser (Trägerflüssigkeit) und wenigstens einer zugesetzten Substanz bzw. einem Wirkstoff zusammen. Die Spritzflüssigkeit S wird im gezeigten Ausführungsbeispiel im Behälter 11 aus dem Frischwasser W und dem wenigstens einen Wirkstoff angemischt. Zum Anmischen der Spritzflüssigkeit S, insbesondere zum Zuführen des Wirkstoffs, kann alternativ oder zusätzlich ein in der Figur nicht gezeigter Einspülbehälter vorgesehen sein, wie beispielsweise weiter unten näher beschrieben ist.

Ferner umfasst die Feldspritze 10 einen aus wenigstens einer Fördereinrichtung 12, wenigstens einer Ventilbaugruppe 14 und mehreren Förderleitungen 13, 15, 18 bestehenden Flüssigkeitskreislauf, der in der gezeigten Ansicht im Wesentlichen links vom Behälter 11 zu sehen ist. Die Spritzflüssigkeit S ist dabei über die als Pumpe ausgebildete Fördereinrichtung 12 und einer ersten Förderleitung 13 aus dem Behälter 11 zu der Ventilbaugruppe 14, welche ein oder mehrere Ventile aufweist, förderbar. Alternativ zur dargestellten Ausführungsvariante kann auch eine Vielzahl von Ventilen verteilt an unterschiedlichen Positionen entlang des Flüssigkeitskreislaufs angeordnet sein. Die Spritzflüssigkeit S wird ausgehend von der Ventilbaugruppe 14 über eine zweite Förderleitung 15 zu einer Vielzahl an einem Spritzgestänge 16 der Feldspitze 10 angeordneten Spritzdüsen 17 geleitet. Die an den Spritzdüsen 17 anstehende Spritzflüssigkeit S ist anschließend in bedarfsgerechten Mengen auf die Nutzfläche ausbringbar. Darüber hinaus ist innerhalb des Flüssigkeitskreislaufs, insbesondere zwischen der Ventilbaugruppe 14 und dem Behälter 11, eine Rücklaufleitung 18 vorgesehen, über welche überschüssige bzw. für die Ausbringung nicht erforderliche Mengen der Spritzflüssigkeit S zu dem Behälter 11 zurückleitbar und anschließend wiederverwendbar sind. Alternativ dazu kann die Rücklaufleitung 18 auch in Förderrichtung der Spritzflüssigkeit S hinter den Düsen 17, insbesondere zwischen den Düsen 17 und dem Behälter 11, angeordnet sein.

Weiterhin wären zum gezeigten Ausführungsbeispiel auch alternative Ausführungsformen denkbar, bei denen das im Behälter 11 vorgehaltene Frischwasser W oder eine Vormischung aus Frischwasser W und einem Wirkstoff erst innerhalb des Flüssigkeitskreislaufs, beispielsweise unmittelbar vor und/oder an den Spritzdüsen 17, zur endgültigen bzw. auszubringenden Spritzflüssigkeit S vermischt wird.

Darüber hinaus weist die Feldspritze 10 wenigstens eine Einspülvorrichtung 20 auf, welche zum Zuführen bzw. Einspülen des Frischwassers W aus einer externen Quelle G in den Behälter 11 vorgesehen ist. Die externe Quelle ist in diesem Ausführungsbeispiel als ein Gewässer G, wie beispielsweise ein Teich oder See, dargestellt.

Die Einspülvorrichtung 20 weist hierbei eine, insbesondere nach Art eines Schlauches ausgebildete, Ansaugleitung 22 auf, welche einseitig und in fluidleitender Weise mit dem Behälter 11 verbunden und/oder verbindbar ist. Entlang der Ansaugleitung 22 ist weiterhin eine als Ansaugpumpe ausgebildete zweite Fördereinrichtung 21 angeordnet, welche dazu eingerichtet ist, das Frischwasser W über die Ansaugleitung 22 aus der externen Quelle G anzusaugen und zum Behälter 11 zu fördern. Zum derartigen Ansaugen des Frischwasser W, ist die Ansaugleitung 22, insbesondere mit einem seiner Enden, in die externe Quelle G einzutauschen und/oder mit dieser zu verbinden. Alternativ oder zusätzlich zum dargestellten Ausführungsbeispiel wäre auch denkbar, dass die externe Quelle G beispielsweise nach Art einer Wasserversorgungsanlage ausgebildet ist und/oder das Frischwasser W bereits durckbeauschlagt in die Einspülvorrichtung 20 und/oder den Behälter 11 zuführbar ist, wobei dabei zusätzlich die zweite Fördereinrichtung 21 entfallen und/oder deaktiviert werden kann.

Darüber hinaus kann alternativ oder zusätzlich wenigstens ein der Einspülvorrichtung 20, vorzugsweise entlang der Ansaugleitung 22 angeordneter, Einspülbehälter vorgesehen sein, über welchen alternativ oder zusätzlich Frischwasser W und/oder Wirkstoff zum Behälter 11 zuführbar ist. Ein derartiger Einspülbehälter wäre auch zum An- und/oder Vormischen von Frischwasser W mit Wirkstoff denkbar.

Da das aus den externen Quellen G bereitgestellte Frischwasser W, insbesondere aus offenen Gewässern, für gewöhnlich verunreinigt ist bzw. Verunreinigung, nach Art von Feststoffpartikeln wie etwa Sand etc., aufweist und somit die Betriebssicherheit der Feldspritze 10 beeinträchtigen kann, ist innerhalb der Feldspritze 10 eine Filterung und/oder Reinigung des zugeführten Frischwassers W vorzusehen.

Erfindungsgemäß ist hierfür eine Filter- und/oder Abscheideeinrichtung 30 vorgesehen, welche insbesondere im Bereich der Einspülvorrichtung 20 angeordnet ist. Wie zu erkennen ist, ist die Filter- und/oder Abscheideeinrichtung 30 in diesem Ausführungsbeispiel entlang der Ansaugleitung 22, insbesondere zwischen der zweiten Fördereinrichtung 21 und dem Behälter 21 angeordnet. Alternativ oder zusätzlich dazu, wäre auch wenigstens eine derartige Filter- und/oder Abscheideeinrichtung 30 entlang des Flüssigkeitskreislaufs denkbar.

Die Filter- und/oder Abscheideeinrichtung 30 ist ferner erfindungsgemäß dazu eingerichtet, das aus der externen Quelle G angesaugte Frischwasser W, insbesondere innerhalb der Einspülvorrichtung 20, zumindest abschnittsweise in Drehung zu versetzen. Hierüber werden die im angesaugten Frischwasser W enthaltenen Verunreinigungen unter Ausnutzung von Zentrifugal- und/oder Fliehkräften zumindest teilweise vom Frischwasser getrennt und/oder in einer von der eigentlichen Förder- bzw. Strömungsrichtung des Frischwassers W abweisenden Richtung abgetragen, was wiederrum zu einer Filterung und/oder Reinigung des Frischwassers W führt.

Der Filter- und/oder Abscheideeinrichtung 30 kann hierzu ein, insbesondere nach Art eines Drehantriebs ausgebildeter, Aktor zugeordnet sein (in der Figur nicht dargestellt), mittels dem die Filter- und/oder Abscheideeinrichtung 30 selbst und/oder ein oder mehrere innerhalb der Filter- und/oder Abscheideeinrichtung 30 angeordnete Elemente, insbesondere rotatorisch, antreibbar sind. Derartige Elemente (auch Filterelemente genannt) können zum Beschleunigen des Frischwassers W und damit der Verunreinigungen vorgesehen sein. Alternativ oder zusätzlich dazu, kann die Filter- und/oder Abscheideeinrichtung 30 auch mit der zweiten Fördereinrichtung 21 gekoppelt und/oder von dieser antreibbar ausgeführt sein. Die Filter- und/oder Abscheideeinrichtung 30 kann insbesondere nach Art eines Separators, beispielsweise eines Tellerseparators, ausgebildet sein.

In einer alternativen oder zusätzlich Ausführungsform kann die Filter- und/oder Abscheideeinrichtung 30 auch nach Art eines Zyklon- und/oder Fliehkraftabscheiders ausgebildet sein.

Ferner ist eine in der Figur ebenfalls nicht dargestellte Stelleinrichtung vorgesehen, welche der Filter- und/oder Abscheideeinrichtung 30 zugeordnet ist und dazu eingerichtet ist, die Filter- und/oder Abscheideeinrichtung 30 einzustellen und/oder zu verstellen. Die Stelleinrichtung kann dabei ferner, insbesondere in Abhängigkeit unterschiedlicher Einflussgrößen, automatisiert von einer der Feldspritze 10 zugeordneten Steuerungs- und/oder Regeleinrichtung und/oder manuell von einem Bediener betätigbar sein.

Insbesondere ist hierbei vorgesehen, dass die Filter- und/oder Abscheideeinrichtung 30 selbstreinigend ausgeführt ist. Hierzu kann die Filter- und/oder Abscheideeinrichtung 30 wenigstens eine zum Abführen von im Frischwasser W enthaltenen Verunreinigungen vorgesehene Öffnung aufweisen, mittels welcher die Verunreinigungen je nach Ausführungsvariante aus der Einspülvorrichtung 30, dem Flüssigkeitskreislauf und/oder der Feldspritze 10 selbst ausleitbar sind. Des Weiteren kann dabei auch vorgesehen sein, dass die Öffnung verschließbar und/oder von der Stelleinrichtung beeinflussbar, insbesondere verstellbar, ausgebildet ist.

Es versteht sich, dass in den zuvor beschriebenen Ausführungsbeispielen genannte Merkmale nicht auf diese speziellen Kombinationen beschränkt und auch in beliebigen anderen Kombinationen möglich sind. Weiterhin versteht es sich, dass in der Figur gezeigte Geometrien nur beispielhaft sind und auch in beliebigen anderen Ausgestaltungen möglich sind.

### Bezugszeichenliste

- 10: Feldspritze
- 11: Behälter
- 12: Erste Fördereinrichtung
- 13: Förderleitung
- 14: Ventilbaugruppe
- 15: Förderleitung
- 16: Spritzgestänge
- 17: Spritzdüsen
- 18: Förderleitung, Rücklaufleitung
- 20: Einspülvorrichtung
- 21: Zweite Fördereinrichtung
- 22: Ansaugleitung
- 30: Filter- und/oder Abscheideeinrichtung

- G: Externe Quelle, Gewässer
- S: Spritzflüssigkeit
- W: Wasser, Frischwasser

## Patentansprüche

1. Landwirtschaftliche Feldspritze (10) mit wenigstens einer Einspülvorrichtung (20) zum Zuführen von Frischwasser (W) aus einer externen Quelle (G), umfassend;
- wenigstens einen der Feldspritze (10) zugeordneten Behälter (11), welchem das Frischwasser (W) über die Einspülvorrichtung (20) zuführbar ist; und
- wenigstens eine zum Reinigen des zugeführten Frischwassers (W) vorgesehene Filter- und/oder Abscheideeinrichtung (30), welche vorzugsweise im Bereich der Einspülvorrichtung (20) angeordnet ist;
**dadurch gekennzeichnet, dass** die Filter- und/oder Abscheideeinrichtung (30) dazu eingerichtet ist, dass Frischwasser (W) zumindest abschnittsweise in Drehung zu versetzen.

2. Feldspritze (10) nach Anspruch 1, **dadurch gekennzeichnet, dass** der Filter- und/oder Abscheideeinrichtung (30) wenigstens ein, vorzugsweise nach Art eines Drehantriebs ausgebildeter, Aktor zugeordnet ist, mittels dem die Filter- und/oder Abscheideeinrichtung (30), vorzugsweise rotatorisch, antreibbar ist.

3. Feldspritze (10) nach zumindest einem der vorgenannten Ansprüche 1 und 2, **dadurch gekennzeichnet, dass** die Filter- und/oder Abscheideeinrichtung (30) wenigstens ein zum Beschleunigen des Frischwassers (W) vorgesehenes Element aufweist, welches durch den Aktor antreibbar ist.

4. Feldspritze (10) nach zumindest einem der vorgenannten Ansprüche 1 bis 3, **dadurch gekennzeichnet, dass** die Filter- und/oder Abscheideeinrichtung (30) nach Art eines Separators, insbesondere eines Tellerseparators, ausgebildet ist.

5. Feldspritze (10) nach Anspruch 1, **dadurch gekennzeichnet, dass** die Filter- und/oder Abscheideeinrichtung (30) nach Art eines Zyklon- und/oder Fliehkraftabscheiders ausgebildet ist.

6. Feldspritze (10) nach zumindest einem der vorgenannten Ansprüche 1 bis 5, **dadurch gekennzeichnet, dass** der Filter- und/oder Abscheideeinrichtung (30) wenigstens eine Stelleinrichtung zugeordnet ist, mittels der die Filter- und/oder Abscheideeinrichtung (30) verstellbar ist.

7. Feldspritze (10) nach zumindest einem der vorgenannten Ansprüche 1 bis 6, **dadurch gekennzeichnet, dass** die Filter- und/oder Abscheideeinrichtung (30) wenigstens eine zum Abführen von im Frischwasser (W) enthaltenen Feststoffpartikeln, insbesondere Verunreinigungen, vorgesehene Öffnung aufweist, über welche die Feststoffpartikel, insbesondere Verunreinigungen, aus einem Flüssigkeitskreislauf der Feldspritze (10) ausleitbar sind.

8. Feldspritze (10) nach den vorgenannten Ansprüchen 6 und 7, **dadurch gekennzeichnet, dass** die Öffnung mittels der Stelleinrichtung beeinflussbar, insbesondere verstellbar, ist.
